# EUROPÄISCHE PATENTSCHRIFT

(11) **EP 4 330 005 B1**
(45) Veröffentlichungstag und Bekanntmachung des Hinweises auf die Patenterteilung: **25.02.2026**
(21) Anmeldenummer: 22748327.8
(22) Anmeldetag: 11.07.2022
(51) Int. Cl.: B29C 44/56, B29C 45/00, B29C 44/12, B29C 45/14, B65D 6/34, B65D 81/38

(54) **KUNSTSTOFFFORMTEIL AUS PARTIKELSCHAUM**
PLASTIC MOLDED ELEMENT MADE FROM EXPANDABLE PARTICLE FOAM
ELEMENT DE MATIÈRE PLASTIQUE MOULE DE MATIÈRE MOUSSEUSE DE PARTICLE EXPANDIBLE

(30) Priorität: 19.07.2021 DE 102021118539
(43) Veröffentlichungstag der Anmeldung: 06.03.2024
(73) Patentinhaber: Feurer Group GmbH, 74336 Brackenheim (DE)
(72) Erfinder: FEURER, Christoph, 76461 Muggensturm (DE); FEURER, Markus, 76461 Muggensturm (DE)
(74) Vertreter: Patentanwälte Bregenzer und Reule Partnerschaftsgesellschaft mbB
(86) Internationale Anmeldenummer: PCT/EP2022/069303
(87) Internationale Veröffentlichungsnummer: WO 2023/001618

(56) Entgegenhaltungen:
- EP-B1- 2 714 542
- DE-A1- 10 345 054
- DE-A1- 102010 021 123
- DE-A1- 102010 044 270
- DE-A1- 102011 054 783
- DE-U1- 202010 005 090
- DE-U1- 202010 010 624
- US-A1- 2020 086 535

## Beschreibung

Die Erfindung betrifft ein Kunststoffformteil gemäß Oberbegriff des Anspruchs 1.

Ein Kunststoffformteil in Form eines Behälters ist aus der EP 2 714 542 B1 bekannt. Dieser weist einen Grundkörper aus einem weichen und thermisch isolierenden Partikelschaum auf, der einstückig oder mehrstückig sein kann. Der vorbekannte Behälter weist Beschläge in Form von Scharnieren auf, welche jeweils zwei Teile des Grundkörpers verschwenkbar miteinander verbinden. Die Scharniere sind aus einem Material gefertigt, das härter ist als der Partikelschaumstoff, und sie weisen jeweils zwei Verankerungspartien auf, welche jede in einem Teil des Grundkörpers verankert sind, sowie eine aus dem Grundkörper herausragende, die Verankerungspartien verschwenkbar miteinander verbindende Funktionspartie. Dieser vorbekannte Behälter hat sich in der Praxis bereits gut bewährt. Die zweistückige Ausbildung der Scharniere ist aber oft aufwendig zu fertigen. Aus der DE 10 2011 054 783 A1 ist ein Kunststoffformteil der eingangs genannten Art in Form eines Kunststoffkoffers bekannt, dessen Scharniere als Filmscharniere einstückig ausgebildet sind.

Es ist daher die Aufgabe der Erfindung, ein Kunststoffformteil der eingangs genannten Art derart weiterzubilden, dass es einfacher hergestellt und/oder einfacher entsorgt werden kann.

Diese Aufgabe wird erfindungsgemäß mit einem Kunststoffformteil mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Fertigung des Kunststoffformteils zu vereinfachen, indem das mindestens eine Scharnier einstückig ausgebildet ist. Beim Aufschäumen des Grundkörpers kann das Scharnier in die Herstellungsform eingelegt werden und wird vom Schaumstoff umschäumt. Ein späteres Zusammensetzen durch schwenkbares Verbinden zweier Teile kann dann entfallen. Insbesondere kann die Scharnierpartie jedes Scharniers durch Prägung entlang einer Biegekante ausgebildet werden, wobei die Prägung noch in der Herstellungsform erfolgen kann. Dies ist insbesondere dann vorteilhaft, wenn gemäß der Erfindung mindestens eines der Scharniere aus einem Hohlkammerprofil gefertigt ist, wobei seine die Scharnierpartie durch Verpressen des Hohlkammerprofils entlang der Biegekante ausgebildet ist, welche dann in der Herstellungsform geprägt werden kann. Eine solche durch Verpressen vorzugsweise unter Wärmeeinwirkung hergestellte Biegekante weist eine hohe Reißfestigkeit auf.

Es ist möglich, dass zumindest zwischen zwei Teilen des Grundkörpers ein Scharnier angeordnet ist, das sich über mehr als die Hälfte und vorzugsweise über mehr als drei Viertel der Länge der einander zugewandten Seiten der beiden Teile erstreckt, um eine stabile Verbindung zu erzielen. Dabei ist es auch möglich, dass das betreffende Scharnier sich über die gesamte Länge der einander zugewandten Seiten erstreckt. Es ist aber auch möglich, dass zumindest zwischen zwei Teilen des Grundkörpers zwei im Abstand zueinander angeordnete Scharniere angeordnet sind, um die Verbindung zu verstärken. Vorteilhaft ist dann zwischen den die beiden Teile des Grundkörpers verbindenden Scharnieren jeweils ein die beiden Teile verbindendes Filmscharnier aus dem Partikelschaumstoff angeordnet, um die Verbindung der beiden Teile weiter zu verbessen. Zudem kann das Filmscharnier einen Spalt zwischen den beiden Teilen abdichten.

Es ist möglich, dass mindestens eine der Scharnierpartien in den Partikelschaumstoff eingebettet ist, so dass das betreffende Scharnier keine freiliegende Oberfläche aufweist. Es ist jedoch auch möglich, dass mindestens eine der Scharnierpartien freiliegt. Auch die Außenflächen der Verankerungspartien können jeweils teilweise aus dem Teil hervorstehen, in dem die betreffende Verankerungspartie verankert ist.

Zweckmäßig weist mindestens eine und vorzugsweise jede der Verankerungspartien sich zwischen zwei einander abgewandten Außenflächen erstreckende Durchbrüche auf, so dass sich der Partikelschaumstoff durch die Durchbrüche erstrecken kann, um eine stabile Verankerung der Verankerungspartie im Partikelschaumstoff zu erzielen. Wenn zumindest eine Außenfläche einer der Verankerungspartien aus dem Teil des Grundkörpers hervorsteht, in dem sie verankert ist, wird bevorzugt, dass jeder der Durchbrüche vollständig in dem Teil aufgenommen ist, in dem die den Durchbruch aufweisende Verankerungspartie verankert ist. Zudem wird bevorzugt, dass der flächige Abschnitt mindestens einer und vorzugsweise jeder der Verankerungspartien eine Dicke von mindestens 2 mm aufweist, vorzugsweise mehr, wobei Dicken zwischen 2 mm und 5 mm bevorzugt werden. Durch diese Maßnahme wird erschwert, dass die Verankerungspartie bei Einwirkung von Zugkräften durch den weichen Partikelschaumstoff schneidet und die Verankerungspartie aus dem Grundkörper gerissen wird.

Erfindungsgemäß sind der Grundkörper und das mindestens eine Scharnier aus demselben Kunststoff, vorzugsweise aus Polypropylen, aus Polyethylen oder aus Polyurethan, hergestellt. Dadurch wird ein sortenreines Recycling ermöglicht, ohne das Scharnier aus dem Grundkörper herauslösen zu müssen. Das Scharnier ist dann zweckmäßig aus Hartkunststoff hergestellt. Weiter ist das Kunststoffformteil vorteilhaft als Behälter ausgebildet, wobei die verschwenkbar miteinander verbundenen Teile einen Behälterboden und vom Behälterboden hochstehende, einen Transportraum rings umschließende Behälterwände umfassen und wobei mindestens eine der Behälterwände und vorzugsweise jede Behälterwand verschwenkbar mit dem Behälterboden verbunden ist.

Im Folgenden wird die Erfindung anhand eines in der Zeichnung schematisch dargestellten Ausführungsbeispiels näher erläutert. Es zeigen
Fig. 1a, b, c Einen Behälter in perspektivischen Ansichten in einer Transportposition, teilweise zusammengefaltet und in Explosionsdarstellung;
Fig. 2 ein Scharnier;

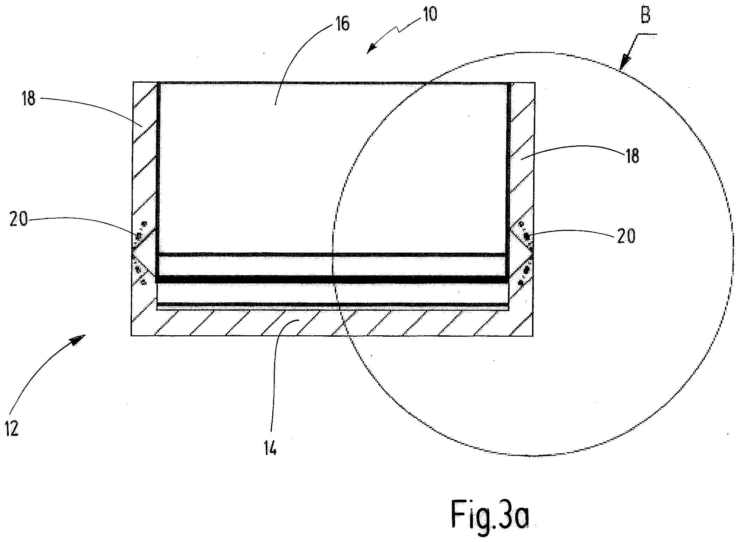

Fig. 3a einen Schnitt durch den Behälter gemäß Fig. 1a;

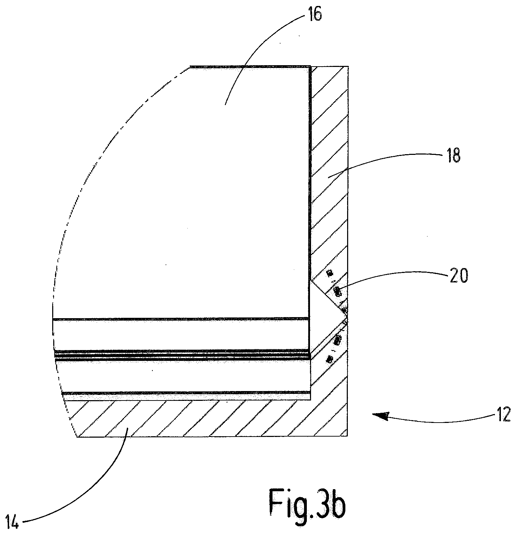

Fig. 3b eine Detaildarstellung B gemäß Fig. 3a;

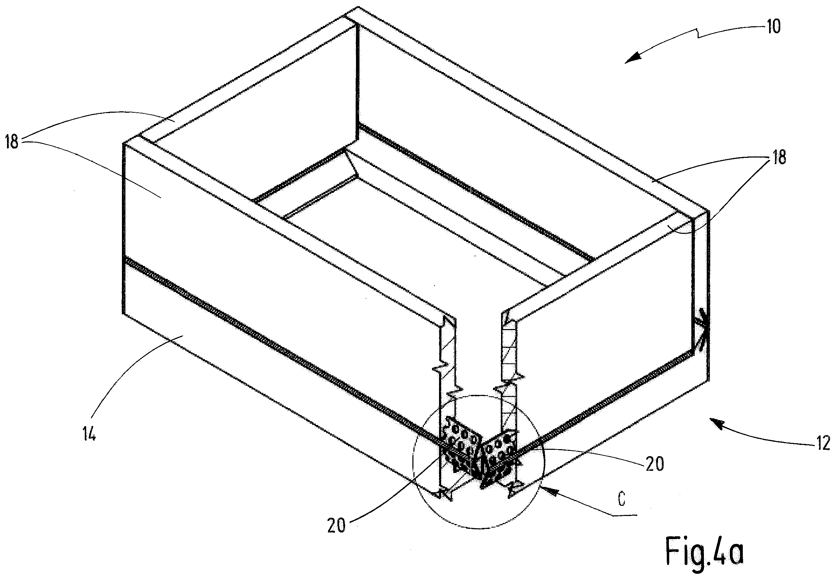

Fig. 4a eine Darstellung des Behälters gemäß Fig. 1a teilweise im Schnitt und

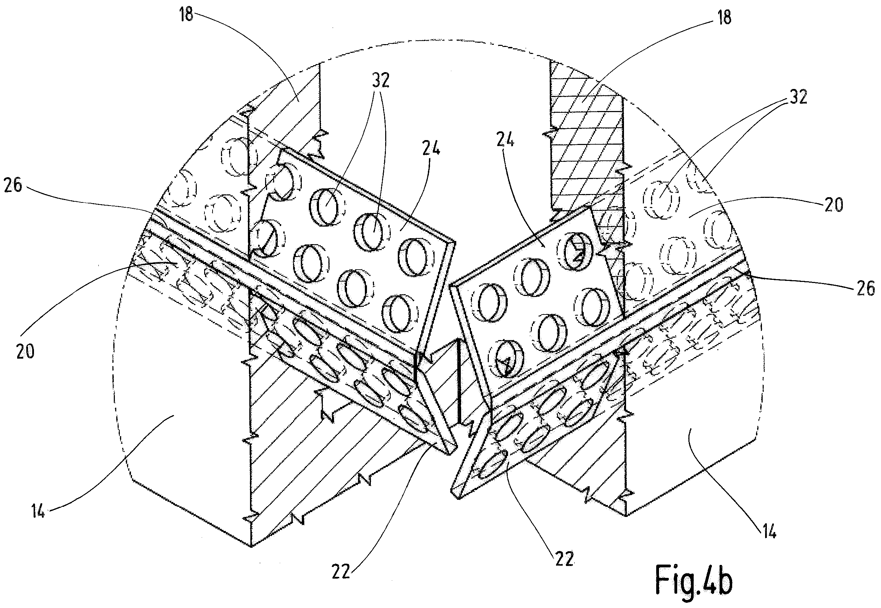

Fig. 4b eine Detaildarstellung C gemäß Fig. 4a.

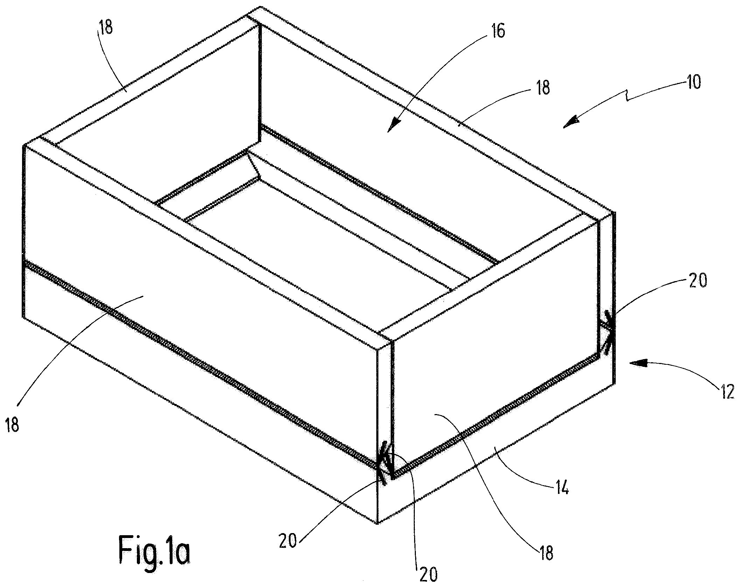

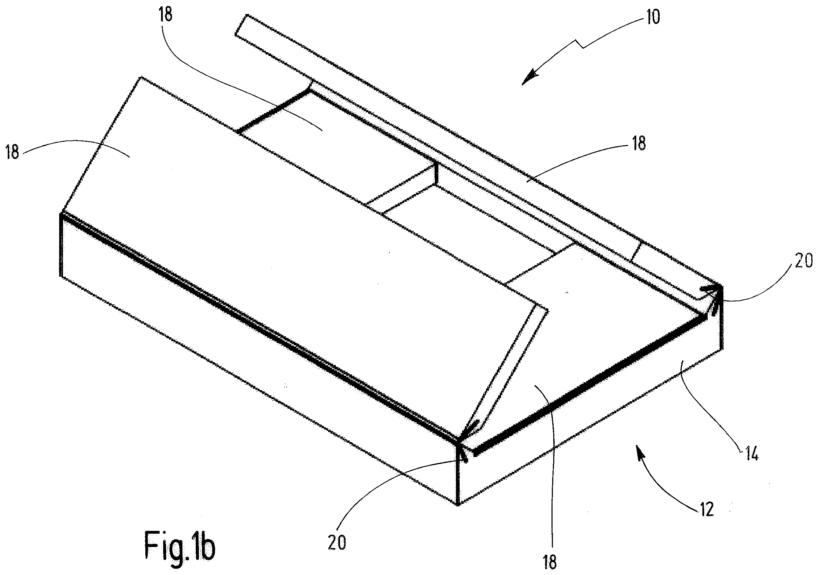

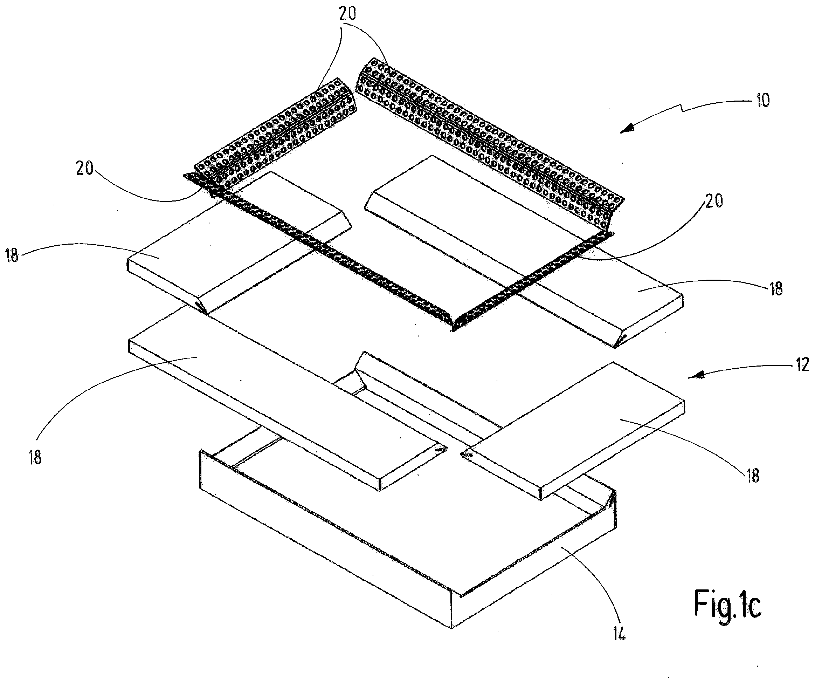

In der Zeichnung ist ein Kunststoffformteil in Gestalt eines Behälters 10 dargestellt, der einen mehrteiligen Grundkörper 12 aus einem Partikelschaumstoff mit einem Behälterboden 14 mit rechteckigem Grundriss und vier in einer in Fig. 1a gezeigten Transportposition vom Behälterboden 14 hochstehenden, einen Transportraum 16 rings umschließenden Behälterwänden 18 aufweist. In einer Klappposition, die in Fig. 1b angedeutet ist, werden die Behälterwände 18 bezüglich des Behälterbodens 14 aufeinander zu oder auch voneinander weg umgeklappt, so dass sich das Volumen des Behälters 10 reduzieren lässt. Zu diesem Zweck ist zwischen dem Behälterboden 14 und jeder der Behälterwände 18 ein Scharnier 20 angeordnet, das sich nahezu über die gesamte Länge der entsprechenden Seite des Behälterbodens 14 erstreckt.

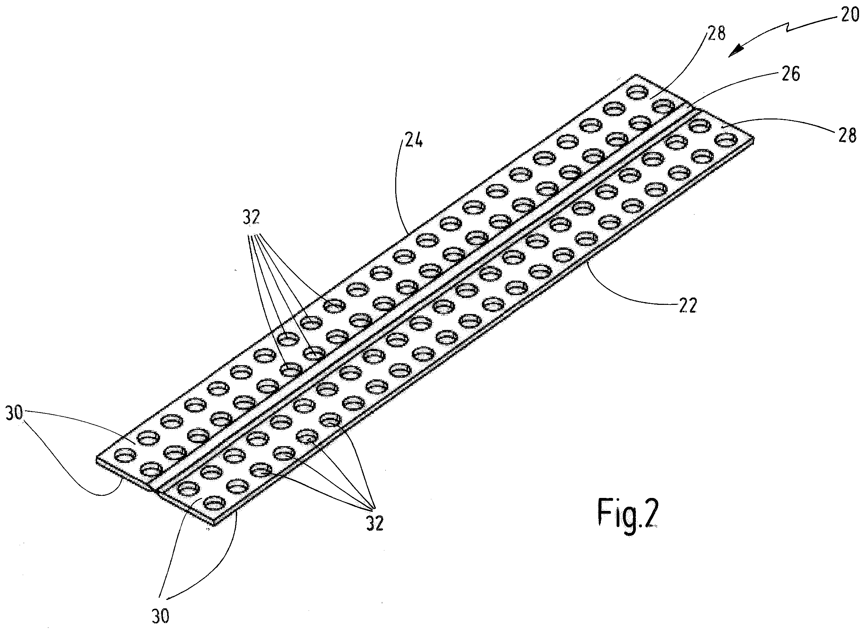

Jedes der Scharniere 20 weist eine erste Verankerungspartie 22 und eine zweite Verankerungspartie 24 auf, welche mittels einer Scharnierpartie 26 einstückig miteinander verbunden sind, die ein gegenseitiges Verschwenken der Verankerungspartien 22, 24 ermöglicht. Im gezeigten Ausführungsbeispiel besteht jede der Verankerungspartien aus einem flächigen Abschnitt 28, der zwei einander abgewandte Außenflächen 30 aufweist. Durch jeden flächigen Abschnitt 28 erstreckt sich eine Vielzahl von Durchbrüchen 32 von einer Außenseite 30 zur anderen, wie insbesondere in Fig. 2 gezeigt. Jede der ersten Verankerungspartien 22 ist im Behälterboden 14 verankert, während jede der zweiten Verankerungspartien 24 in einer der Behälterwände 18 verankert ist. Dabei erstreckt sich der Partikelschaumstoff durch die Durchbrüche 32 hindurch.

Der Partikelschaumstoff ist meist ein expandiertes Polypropylen, ein expandiertes Polyethylen oder ein expandiertes Polyurethan. Die Scharniere sind dann aus demselben Material gefertigt, also aus Polypropylen, aus Polyethylen oder aus Polyurethan. Sie werden bei der Herstellung des Behälters 10 in die Herstellungsform eingelegt, und ihre Verankerungspartien 22, 24 werden beim Aufschäumprozess vom Partikelschaumstoff umschäumt, welcher auch die Durchbrüche ausfüllt. Die Scharniere werden aus einem Hohlkammerprofil mit einer Dicke von mindestens 2 mm einstückig hergestellt, wobei ihre Scharnierpartien 26 durch Prägen des Hohlkammerprofils in der Herstellungsform als Biegekanten ausgebildet werden.

Bei dem gezeigten Ausführungsbeispiel sind die Scharnierpartien 26 jeweils in den Partikelschaumstoff eingebettet und auf beiden Seiten von diesem eingehüllt. Es versteht sich aber von selbst, dass sie auch freiliegen können, ebenso wie auch die Außenflächen 30 der Verankerungspartien 22, 24 ein Stück weit aus dem Partikelschaumstoff ragen können.

Zusammenfassend ist folgendes festzuhalten: Die Erfindung betrifft ein Kunststoffformteil mit einem Grundkörper 12 aus einem Partikelschaumstoff, der mindestens zwei verschwenkbar miteinander verbundene Teile 14, 18 aufweist, wobei zwischen jeweils zwei miteinander verschwenkbar verbundenen Teilen 14, 18 mindestens ein Scharnier 20 angeordnet ist, das aus einem Material besteht, das härter ist als der Partikelschaumstoff und das eine im ersten der beiden Teile 14 verankerte erste Verankerungspartie 22 und eine im zweiten der beiden Teile 18 verankerte zweite Verankerungspartie 24 sowie eine zwischen den Verankerungspartien 22, 24 angeordnete, die Verankerungspartien 22, 24 verschwenkbar miteinander verbindende Scharnierpartie 26 aufweist wobei die Verankerungspar**tien 22, 24 vorzugsweise jeweils einen flächigen Abschnitt aufweisen. Erfindungsgemäß ist vorgesehen, dass das mindestens eine Scharnier 20 einstückig ausge**bildet ist, wobei der Grundkörper 12 und das mindestens eine Scharnier 20 aus demselben Kunststoff, vorzugsweise aus Polypropylen, aus Polyethylen oder aus Polyurethan, hergestellt sind und dass mindestens eines der Scharniere 20 aus einem Hohlkammerprofil gefertigt ist, wobei seine Scharnierpartie 26 durch Verpressen des Hohlkammerprofils entlang einer Biegekante ausgebildet ist.

## Patentansprüche

1. Kunststoffformteil mit einem Grundkörper (12) aus einem Partikelschaumstoff, der mindestens zwei verschwenkbar miteinander verbundene Teile (14, 18) aufweist, wobei zwischen jeweils zwei miteinander verschwenkbar verbundenen Teilen (14, 18) mindestens ein Scharnier (20) angeordnet ist, das aus einem Material besteht, das härter ist als der Partikelschaumstoff und das eine im ersten der beiden Teile (14) verankerte erste Verankerungspartie (22) und eine im zweiten der beiden Teile (18) verankerte zweite Verankerungspartie (24) sowie eine zwischen den Verankerungspartien (22, 24) angeordnete, die Verankerungspartien (22, 24) verschwenkbar miteinander verbindende Scharnierpartie (26) aufweist, wobei das mindestens eine Scharnier (20) einstückig ausgebildet ist, **dadurch gekennzeichnet, dass** der Grundkörper (12) und das mindestens eine Scharnier (20) aus demselben Kunststoff, vorzugsweise aus Polypropylen, aus Polyethylen oder aus Polyurethan, hergestellt sind und dass mindestens eines der Scharniere (20) aus einem Hohlkammerprofil gefertigt ist, wobei seine Scharnierpartie (26) durch Verpressen des Hohlkammerprofils entlang einer Biegekante ausgebildet ist.

2. Kunststoffformteil nach Anspruch 1, **dadurch gekennzeichnet, dass** zumindest zwischen zwei Teilen (14, 18) des Grundkörpers (12) ein Scharnier (20) angeordnet ist, das sich über mehr als die Hälfte und vorzugsweise über mehr als drei Viertel der Länge der einander zugewandten Seiten der beiden Teile (14, 18) erstreckt.

3. Kunststoffformteil nach Anspruch 1 oder 2, **dadurch gekennzeichnet, dass** zumindest zwischen zwei Teilen (14, 18) des Grundkörpers (12) zwei im Abstand zueinander angeordnete Scharniere (20) angeordnet sind.

4. Kunststoffformteil nach Anspruch 3, **dadurch gekennzeichnet, dass** zwischen den die beiden Teile (14, 18) des Grundkörpers (12) verbindenden Scharnieren (20) jeweils ein die beiden Teile (14, 18) verbindendes Filmscharnier aus dem Partikelschaumstoff angeordnet ist.

5. Kunststoffformteil nach einem der vorangehenden Ansprüche, **dadurch gekennzeichnet, dass** die Außenflächen (30) der Verankerungspartien (22, 24) jeweils teilweise aus dem Teil (14, 18) hervorstehen, in dem die betreffende Verankerungspartie (22, 24) verankert ist.

6. Kunststoffformteil nach einem der vorangehenden Ansprüche, **dadurch gekennzeichnet, dass** mindestens eine und vorzugsweise jede der Verankerungspartien (22, 24) sich zwischen zwei einander abgewandten Außenflächen (30) erstreckende Durchbrüche (32) aufweist.

7. Kunststoffformteil nach Anspruch 5 und nach Anspruch 6, **dadurch gekennzeichnet, dass** jeder der Durchbrüche (32) vollständig in dem Teil (14, 18) aufgenommen ist, in dem die den Durchbruch (32) aufweisende Verankerungspartie (22, 24) verankert ist.

8. Kunststoffformteil nach einem der vorangehenden Ansprüche, **dadurch gekennzeichnet, dass** mindestens eine und vorzugsweise jede der Verankerungspartien (22, 24) eine Dicke von mindestens 2 mm aufweist.

9. Kunststoffformteil nach einem der vorangehenden Ansprüche, **dadurch gekennzeichnet, dass** mindestens eine der Scharnierpartien (26) freiliegt.

10. Kunststoffformteil nach einem der vorangehenden Ansprüche, **dadurch gekennzeichnet, dass** mindestens eine der Scharnierpartien (26) in den Partikelschaumstoff eingebettet ist.

11. Kunststoffformteil nach einem der vorangehenden Ansprüche, **dadurch gekennzeichnet, dass** die verschwenkbar miteinander verbundenen Teile einen Behälterboden (14) und vom Behälterboden (14) hochstehende, einen Transportraum (16) rings umschließende Behälterwände (18) umfassen, wobei mindestens eine der Behälterwände (18) und vorzugsweise jede Behälterwand (18) verschwenkbar mit dem Behälterboden (14) verbunden ist.

12. Verfahren zur Herstellung eines Kunststoffformteils nach einem der vorangehenden Ansprüche, wobei die Verankerungspartien (22, 24) des mindestens einen Scharniers (20) in einer Herstellungsform in den Partikelschaumstoff eingebettet werden und wobei die Scharnierpartie (26) jedes der Scharniere (20) durch Prägung entlang einer Biegekante ausgebildet wird.

## Claims

1. Plastic molded element having a main body (12) that consists of a particle foam and has at least two parts (14, 18), which are connected pivotably to one another, wherein at least one hinge (20) is arranged between each pair of pivotably interconnected parts (14, 18), consists of a material that is harder than the particle foam, and has a first anchoring section (22), which is anchored in the first of the two parts (14), and a second anchoring section (24), which is anchored in the second of the two parts (18), and a hinge section (26), which is arranged between the anchoring sections (22, 24) and connects the anchoring sections (22, 24) pivotably to one another, wherein the at least one hinge (20) is formed in one piece, **characterized in that** the main body (12) and the at least one hinge (20) are produced from the same plastic, preferably from polypropylene, polyethylene or polyurethane, and **in that** at least one of the hinges (20) is manufactured from a hollow chamber profile, wherein its hinge section (26) is formed by compressing the hollow chamber profile along a bending edge.

2. Plastic molded element according to claim 1, **characterized in that** a hinge (20) is arranged at least between two parts (14, 18) of the main body (12) and extends over more than half and preferably more than three quarters of the length of the mutually facing sides of the two parts (14, 18).

3. Plastic molded element according to claim 1 or 2, **characterized in that** two mutually spaced hinges (20) are arranged at least between two parts (14, 18) of the main body (12).

4. Plastic molded element according to claim 3, **characterized in that** a film hinge that consists of the particle foam and connects the two parts (14, 18) is arranged in each case between the hinges (20) connecting the two parts (14, 18) of the main body (12).

5. Plastic molded element according to one of the preceding claims, **characterized in that** the outer faces (30) of the anchoring sections (22, 24) each protrude partially from the part (14, 18) in which the relevant anchoring section (22, 24) is anchored.

6. Plastic molded element according to one of the preceding claims, **characterized in that** at least one and preferably each of the anchoring sections (22, 24) has holes (32) that extend between two outer faces (30) that face away from one another.

7. Plastic molded element according to claim 5 and claim 6, **characterized in that** each of the holes (32) is completely accommodated in the part (14, 18) in which the anchoring section (22, 24) having the hole (32) is anchored.

8. Plastic molded element according to one of the preceding claims, **characterized in that** at least one and preferably each of the anchoring sections (22, 24) has a thickness of at least 2 mm.

9. Plastic molded element according to one of the preceding claims, **characterized in that** at least one of the hinge sections (26) is exposed.

10. Plastic molded element according to one of the preceding claims, **characterized in that** at least one of the hinge sections (26) is embedded in the particle foam.

11. Plastic molded element according to one of the preceding claims, **characterized in that** the parts that are connected pivotably to one another comprise a container bottom (14) and container walls (18), which stand upright from the container bottom (14) and enclose a transport space (16), wherein at least one of the container walls (18) and preferably each container wall (18) is connected pivotably to the container bottom (14).

12. Method for producing a plastic molded element according to one of the preceding claims, wherein the anchoring sections (22, 24) of the at least one hinge (20) are embedded in the particle foam in a production mold, and wherein the hinge section (26) of each of the hinges (20) is formed by embossing along a bending edge.

## Revendications

1. Pièce moulée en matière plastique avec un corps de base (12) en une mousse particulaire, qui présente au moins deux pièces (14, 18) reliées entre elles de manière pivotante, au moins une charnière (20) étant agencée entre chacune des deux pièces (14, 18) reliées entre elles de manière pivotante, laquelle charnière est constituée d'un matériau plus dur que la mousse particulaire et qui présente une première partie d'ancrage (22) ancrée dans la première des deux pièces (14) et une deuxième partie d'ancrage (24) ancrée dans la deuxième des deux pièces (18) ainsi qu'une partie de charnière (26) agencée entre les parties d'ancrage (22, 24), reliant les parties d'ancrage (22, 24) entre elles de manière pivotante, l'au moins une charnière (20) étant réalisée d'un seul tenant, **caractérisée en ce que** le corps de base (12) et l'au moins une charnière (20) sont fabriqués à partir de la même matière plastique, de préférence du polypropylène, du polyéthylène ou du polyuréthane, et **en ce qu'**au moins une des charnières (20) est fabriquée à partir d'un profilé à chambre creuse, sa partie de charnière (26) étant réalisée par compression du profilé à chambre creuse le long d'un bord de flexion.

2. Pièce moulée en matière plastique selon la revendication 1, **caractérisée en ce qu'**au moins entre deux pièces (14, 18) du corps de base (12) est agencée une charnière (20) qui s'étend sur plus de la moitié et de préférence sur plus des trois quarts de la longueur des côtés se faisant face des deux pièces (14, 18).

3. Pièce moulée en matière plastique selon la revendication 1 ou 2, **caractérisée en ce qu'**au moins entre deux pièces (14, 18) du corps de base (12) sont agencées deux charnières (20) agencées à distance l'une de l'autre.

4. Pièce moulée en matière plastique selon la revendication 3, **caractérisée en ce qu'**entre les charnières (20) reliant les deux pièces (14, 18) du corps de base (12) est agencée une charnière en film en mousse particulaire reliant les deux pièces (14, 18).

5. Pièce moulée en matière plastique selon l'une quelconque des revendications précédentes, **caractérisée en ce que** les surfaces extérieures (30) des parties d'ancrage (22, 24) dépassent chacune partiellement de la pièce (14, 18) dans laquelle la partie d'ancrage (22, 24) concernée est ancrée.

6. Pièce moulée en matière plastique selon l'une quelconque des revendications précédentes, **caractérisée en ce qu'**au moins une et de préférence chacune des parties d'ancrage (22, 24) présente des percées (32) s'étendant entre deux surfaces extérieures (30) détournées l'une de l'autre.

7. Pièce moulée en matière plastique selon la revendication 5 et selon la revendication 6, **caractérisée en ce que** chacune des percées (32) est entièrement reçue dans la pièce (14, 18) dans laquelle est ancrée la partie d'ancrage (22, 24) présentant la percée (32).

8. Pièce moulée en matière plastique selon l'une quelconque des revendications précédentes, **caractérisée en ce qu'**au moins une et de préférence chacune des parties d'ancrage (22, 24) présente une épaisseur d'au moins 2 mm.

9. Pièce moulée en matière plastique selon l'une quelconque des revendications précédentes, **caractérisée en ce qu'**au moins l'une des parties de charnière (26) est exposée.

10. Pièce moulée en matière plastique selon l'une quelconque des revendications précédentes, **caractérisée en ce qu'**au moins l'une des parties de charnière (26) est incorporée dans la mousse particulaire.

11. Pièce moulée en matière plastique selon l'une quelconque des revendications précédentes, **caractérisée en ce que** les pièces reliées entre elles de manière pivotante comprennent un fond de récipient (14) et des parois de récipient (18) s'élevant depuis le fond de récipient (14), entourant circulairement un espace de transport (16), au moins l'une des parois de récipient (18) et de préférence chaque paroi de récipient (18) étant reliée de manière pivotante au fond de récipient (14).

12. Procédé de fabrication d'une pièce moulée en matière plastique selon l'une quelconque des revendications précédentes, dans lequel les parties d'ancrage (22, 24) de l'au moins une charnière (20) sont incorporées dans la mousse particulaire dans un moule de fabrication et la partie de charnière (26) de chacune des charnières (20) est réalisée par estampage le long d'un bord de flexion.
